# EUROPÄISCHE PATENTANMELDUNG

(11) **EP 2 023 457 A2**
(43) Veröffentlichungstag der Anmeldung: **11.02.2009**
(21) Anmeldenummer: 08013881.1
(22) Anmeldetag: 02.08.2008
(51) Int. Cl.: H02J 3/14

(54) **Schaltvorrichtung und Verfahren zum Ansteuern eines Leistungsverbrauchers**

(30) Priorität: 10.08.2007 DE 102007037768
(71) Anmelder: Diehl AKO Stiftung & Co. KG, 88239 Wangen im Allgäu (DE)
(72) Erfinder: Simon, Helmut, 88260 Argenbühl (DE); Kaps, Werner, 88171 Weiler-Simmerberg (DE)
(74) Vertreter: Diehl Patentabteilung

(57) **Zusammenfassung**

Es wird eine Schaltvorrichtung (12) zum Ansteuern eines Verbrauchers (10) vorgeschlagen, die in Reihe zu dem anzusteuernden Verbraucher (10) zwischen zwei Anschlüssen (N, L) einer Spannungsversorgung angeordnet wird. Die erfindungsgemäße Schaltvorrichtung (12) umfasst eine Parallelschaltung aus einem Triac (16) und einem Relais (20), die unabhängig voneinander ansteuerbar sind. Indem zum Betrieb des Verbrauchers (10) das Relais (20) eingeschaltet und der Triac (16) ausgeschaltet wird und zum Ein- und Ausschalten des Verbrauchers (10) der Triac (16) eingeschaltet wird, können die Vorteile dieser beiden Komponenten (16, 20) ausgenutzt und ihre Nachteile umgangen werden.

## Beschreibung

Die vorliegende Erfindung betrifft eine Schaltvorrichtung und ein Verfahren zum Ansteuern eines Verbrauchers, insbesondere eines elektrischen Verbrauchers mit einer großen Anzahl von Ein- und Ausschaltvorgängen und einem großen Laststrom, wie zum Beispiel einer Heizung eines Wäschetrockners oder dergleichen elektrischen Haushaltsgeräts.

Dem Fachmann sind verschiedene Möglichkeiten zum Ansteuern eines solchen Verbrauchers bekannt.

Beispielsweise enthält die Schaltvorrichtung zum Ansteuern eines solchen elektrischen Verbrauchers ein Relais, das für die benötigte Anzahl von Schaltvorgängen und den erforderlichen Laststrom spezifiziert ist. Ein derartiges Relais ist sehr teuer und sehr groß und daher montageunfreundlich. Je nach geforderter Schaltanzahl existiert ein solches Relais möglicherweise überhaupt nicht. Dieser Ansatz ist daher in Wäschebehandlungsgeräten ungebräuchlich.

Ferner besteht die Möglichkeit, einen Heizkörper einer Leistung von zum Beispiel etwa 2 kW in einen ersten Heizkörper hoher Leistung von etwa 1,3 kW und einen zweiten Heizkörper niedriger Leistung von etwa 700 W aufzuteilen. Dabei ist der erste Heizkörper so dimensioniert, dass durch ihn die benötigte Temperatur nicht erreicht werden kann, und er wird dauerhaft eingeschaltet oder zumindest nur selten geschaltet. Die Temperaturregelung findet durch entsprechend häufiges Schalten des zweiten Heizkörpers statt. Hierfür kann ein Relais mit geringerem zulässigen Schaltstrom als für die Gesamtheizung verwendet werden, welches kostengünstiger ist. Nachteilig bei diesem Ansatz ist aber, dass ein zweiter Heizkörper, ein zweites Relais und die zusätzliche Verdrahtung des zweiten Heizkreises erforderlich sind.

Bei dem vorgenannten Ansatz mit zwei Heizkörpern kann zur Ansteuerung des Heizkreises niedriger Leistung anstelle des Relais alternativ auch ein Triac eingesetzt werden. Die oben genannten Nachteile sind aber dennoch weiter vorhanden.

Ein weiterer Lösungsansatz besteht darin, die Ansteuerung des Heizkreises ausschließlich durch einen Triac durchzuführen. Hierdurch kann eine unbegrenzte Anzahl von Schaltvorgängen erreicht werden, allerdings erwärmt sich der Triac bei hohen Lastströmen stark, sodass ein großer Kühlkörper benötigt wird. Dieser Kühlkörper ist teuer, besitzt ein großes Einbauvolumen und eine große Masse und ist daher montageunfreundlich. Falls der für den Kühlkörper benötigte Einbauraum nicht zur Verfügung steht, ist eine derartige Schaltvorrichtung nicht einsetzbar.

Ferner kann die Anzahl der Schaltvorgänge auch durch geschickte Ansteueralgorithmen reduziert werden. Beispielsweise können eine vergrößerte Schalthysterese oder eine feste zeitliche Sperre nach einem Schaltvorgang, innerhalb derer kein weiterer Schaltvorgang erfolgen darf, vorgesehen werden. Hierbei muss jedoch immer eine Verringerung der Regelgenauigkeit in Kauf genommen werden. Ist dies nicht zulässig bzw. erwünscht, so kann diese Methode nicht angewendet werden.

Der vorliegenden Erfindung liegt die Aufgabe zugrunde, eine Schaltvorrichtung und ein Verfahren zum Ansteuern eines elektrischen Verbrauchers, der eine große Anzahl von Schaltvorgängen und einen hohen Laststrom benötigt, bereitzustellen, welche die oben genannten Nachteile bei den herkömmlichen Lösungsansätzen vermeiden.

Diese Aufgabe wird gelöst durch eine Schaltvorrichtung mit den Merkmalen des Anspruchs 1 bzw. ein Verfahren mit den Merkmalen des Anspruchs 7. Vorteilhafte Ausgestaltungen und Weiterbildungen der Erfindung sind Gegenstand der jeweiligen abhängigen Ansprüche.

Die Schaltvorrichtung zum Ansteuern eines Verbrauchers, die in Reihe zu dem anzusteuernden Verbraucher zwischen zwei Anschlüssen einer Spannungsversorgung angeordnet wird, umfasst erfindungsgemäß eine Parallelschaltung aus einem Triac und einem Relais, die unabhängig voneinander angesteuert werden können. Zu diesem Zweck ist dem Triac und dem Relais jeweils eine Ansteuerschaltung zugeordnet und jede der Ansteuerschaltungen ist mit einem Steueranschluss verbunden.

Durch die erfindungsgemäße Kombination der beiden Schaltelemente Triac und Relais in der Schaltvorrichtung können jeweils deren Vorteile (Triac: unbegrenzte Anzahl von Schaltvorgängen; Relais: hoher Laststrom) ausgenutzt und deren Nachteile (Triac: Erwärmung bei hohem Laststrom; Relais: begrenzte Lebensdauer durch Schaltvorgänge) vermieden werden. Somit kann ein kostengünstiges Relais eingesetzt werden, das lediglich so dimensioniert sein muss, dass es einen entsprechenden Laststrom führen kann, und der Triac kann ohne oder nur mit einem kleinen Kühlkörper verwendet werden. Der elektrische Verbraucher kann außerdem über einen einzigen Lastkreis mit der erforderlichen Gesamtleistung betrieben werden.

In einer vorteilhaften Ausgestaltung der Erfindung sind der Triac und das Relais zusammen mit ihren Ansteuerschaltungen in einem gemeinsamen Gehäuse angeordnet, sodass die Montagefreundlichkeit erhöht ist. Dabei kann die Schaltvorrichtung einen Anschluss zur Spannungsversorgung der Ansteuerschaltungen aufweisen oder die Spannungsversorgung der Ansteuerschaltungen wird aus der Spannungsversorgung des Verbrauchers oder aus Steuersignalen der Ansteuerschaltungen gewonnen.

In einer bevorzugten Ausgestaltung der Erfindung wird zum Betrieb des Verbrauchers das Relais eingeschaltet und der Triac ausgeschaltet und wird zum Ein- und Ausschalten des Verbrauchers der Triac eingeschaltet wird.

Beispielsweise umfasst ein Einschaltvorgang des Verbrauchers die folgenden Schritte: a) ausgehend von einem ausgeschalteten Triac und einem ausgeschalteten Relais wird zunächst der Triac eingeschaltet; b) bei eingeschaltetem Triac wird dann das Relais eingeschaltet; und c) bei eingeschaltetem Relais wird dann der Triac ausgeschaltet. Und ein Ausschaltvorgang des Verbrauchers umfasst die folgenden Schritte: a) ausgehend von einem ausgeschalteten Triac und einem eingeschalteten Relais wird zunächst der Triac eingeschaltet; b) bei eingeschaltetem Triac wird dann das Relais ausgeschaltet; und c) bei ausgeschaltetem Relais wird dann der Triac ausgeschaltet.

Wie nachfolgend anhand eines bevorzugten Ausführungsbeispiels im Detail ausgeführt, wird auf diese Weise erreicht, dass einerseits der große Laststrom beim Betrieb des Verbrauchers durch das Relais fließt, d.h. der Triac sich beim Betrieb des Verbrauchers nicht erwärmt und daher nicht gekühlt werden muss, und andererseits das Relais nur bei einem geringen Spannungsabfall über dem Bauteil ein- und ausgeschaltet wird, d.h. das Relais schonend geschaltet wird.

Die Schaltvorrichtung und das Verfahren der Erfindung sind in vorteilhafter Weise bei elektrischen Verbrauchern anwendbar, die eine große Anzahl von Schaltvorgängen und einen hohen Laststrom erfordern. Der elektrische Verbraucher kann dabei ein resistiver, ein induktiver oder ein kapazitiver Verbraucher sein. Ein spezielles Anwendungsbeispiel der Erfindung ist eine Heizung eines Wäschetrockners oder dergleichen elektrischen Haushaltsgeräts.

Obige sowie weitere Merkmale und Vorteile der Erfindung werden aus der nachfolgenden Beschreibung eines bevorzugten, nicht-einschränkenden Ausführungsbeispiels unter Bezug auf die beiliegenden Zeichnungen besser verständlich. Darin zeigen:
- Figur 1: ein schematisches Blockschaltbild eines Lastkreises mit einem elektrischen Verbraucher und einer Schaltvorrichtung gemäß einem bevorzugten Ausführungsbeispiel der vorliegenden Erfindung; und
- Figur 2: ein Zeitdiagramm zur Veranschaulichung der Steuersignale und des Laststroms bei den Ein- und Ausschaltvorgängen des elektrischen Verbrauchers.

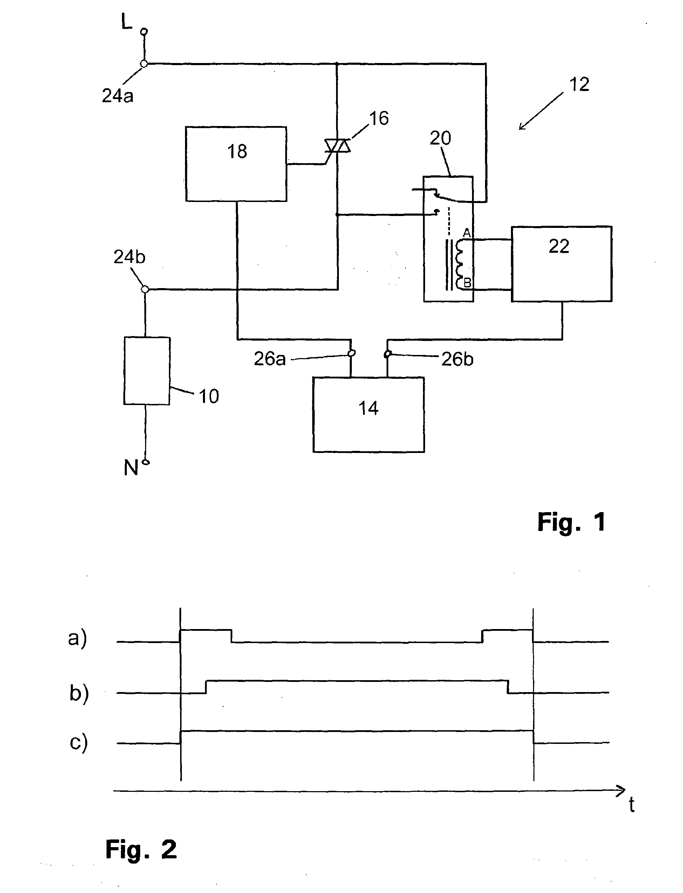

Aufbau und Funktionsweise eines bevorzugten Ausführungsbeispiels einer Schaltvorrichtung zum Ansteuern eines elektrischen Verbrauchers werden nun Bezug nehmend auf Fig. 1 und 2 im Detail beschrieben. Dabei wird die Erfindung nachfolgend am Beispiel einer Wäschetrocknerheizung als elektrischem Verbraucher erläutert, ohne dass die Erfindung auf diese Anwendung beschränkt sein soll.

Wie in Fig. 1 dargestellt, ist der elektrische Verbraucher 10 zwischen zwei Anschlüssen N und L einer Spannungsversorgung mit einer Schaltvorrichtung 12 in Reihe geschaltet. Die Schaltvorrichtung 12 wird von einer Steuerung 14 wie beispielsweise einem Mikrocontroller angesteuert.

Die Schaltvorrichtung 12 umfasst eine Parallelschaltung aus einem Triac 16 mit zugehöriger Ansteuerschaltung 18 und einem Relais 20 mit zugehöriger Ansteuerschaltung 22. Weiter ist die Schaltvorrichtung 12 mit zwei Lastanschlüssen 24a, 24b zum Anschließen in den Lastkreis und zwei Steueranschlüssen 26a, 26b zum Zuführen der jeweiligen Steuersignale von der Steuerung 14 zu den beiden Ansteuerschaltungen 18 und 22 der beiden Schaltelemente 16, 20 versehen.

Die Schaltungsanordnung aus Triac 16 und Relais 20 einschließlich ihrer Ansteuerschaltungen 18, 22 wird vorzugsweise in einem einzigen Gehäuse aufgenommen. So entsteht eine Schaltvorrichtung 12 mit den zwei Lastanschlüssen 24a, 24b, dem zweipoligen Steueranschluss 26a, 26b und einem einen Anschluss (nicht dargestellt) zur Spannungsversorgung der Ansteuerschaltungen 18, 22, insbesondere der Ansteuerschaltung 22 des Relais 20. Die Montage dieser Schaltvorrichtung 12 erfolgt ähnlich der eines normalen Relais.

Alternativ kann bei der Schaltvorrichtung 12 auch auf den genannten Anschluss zur Spannungsversorgung der Ansteuerschaltung 22 des Relais 20 verzichtet werden, wenn die Spannungsversorgung entweder direkt aus der Spannungsversorgung N, L des Verbrauchers 10 oder aus dem Steuersignal der Ansteuerschaltung 22 selbst durch ein geeignetes Netzteil gewonnen wird. In diesem Fall kann die Schaltvorrichtung als 1:1 - Ersatz für ein vorhandenes Relais einer herkömmlichen Schaltung eingesetzt werden.

Es wird nun unter Bezug auf das Zeitdiagramm von Fig. 2 die Funktionsweise der oben beschriebenen Schaltvorrichtung 12 von Fig. 1 erläutert.

Die obere Kurve a) in Fig. 2 zeigt den zeitlichen Verlauf des Steuersignals am Steueranschluss 26a, d.h. für die Ansteuerschaltung 18 des Triacs 16; die mittlere Kurve b) zeigt den zeitlichen Verlauf des Steuersignals am Steueranschluss 26b, d.h. für die Ansteuerschaltung 22 des Relais 20; und die untere Kurve c) zeigt den zeitlichen Verlauf des durch die Schaltvorrichtung 12 und den Verbraucher 10 fließenden Laststroms.

Beim Einschaltvorgang des elektrischen Verbrauchers 10 (linke Seite in Fig. 2) wird - ausgehend von den ausgeschalteten Schaltelementen 16, 20 - zuerst der Triac 16 eingeschaltet. Sobald der Laststrom über den Triac 16 fließt, wird das Relais 20 ebenfalls eingeschaltet (stromloser Schaltvorgang). Aufgrund des sehr niederohmigen Relaiskontakts geht der Laststrom größtenteils vom Triac 16 auf das Relais 20 über. Dann wird der Triac 16 ausgeschaltet und der Laststrom fließt vollständig über das Relais 20.

Beim Ausschaltvorgang des elektrischen Verbrauchers 10 (rechte Seite in Fig. 2) wird - ausgehend von einem eingeschalteten Relais 20 - zunächst der Triac 16 eingeschaltet. Sobald ein Teil des Laststroms über den Triac 16 fließt, wird das Relais 20 geöffnet und der gesamte Laststrom fließt über den Triac 16 weiter. Dann wird die Ansteuerung des Triacs 16 unterbrochen und der Laststrom dadurch abgeschaltet.

Der Erfindung liegt die Erkenntnis zugrunde, dass ein Relais bei entsprechender Auslegung zwar problemlos hohe Lastströme führen kann, seine Lebensdauer aber durch die Anzahl der Schaltvorgänge begrenzt wird. Andererseits erlaubt ein Triac eine unbegrenzte Anzahl von Schaltvorgängen.

Wird ein Relais geöffnet oder geschlossen, fällt in diesem Augenblick über den Relaiskontakt eine elektrische Leistung P = U × I ab, wobei U der Spannungsabfall und I der geschaltete Strom ist. Da beim Zuschalten oder Öffnen des Relais die Fläche der aneinander liegenden Relaiskontakte zwangsläufig von punktuellem Anliegen (hoher Übergangswiderstand) bis zu sattem Aufliegen (niedriger Übergangswiderstand) variiert, entsteht zu einem bestimmten Zeitpunkt des Schaltvorgangs immer eine sehr hohe Leistung. Bei einer herkömmlichen Schaltvorrichtung, die nur ein Relais enthält, ist der Spannungsabfall U zum Beispiel U_{Netz} = 230 V. Diese Verlustleistung führt zu einer Erwärmung oder sogar Funkenbildung, was auf Dauer eine Beschädigung der Relaiskontakte zur Folge hat, und bestimmt daher stark die Lebensdauer des Relais. Insbesondere bei induktiven Lasten kann während des Ausschaltvorgangs eine besonders schädliche Spannungsüberhöhung bei gleichzeitig hohem Stromfluss entstehen.

Wie oben beschrieben, wird bei dem erfindungsgemäßen Ausführungsbeispiel dem Relais 20 ein Triac 16 parallel zugeschaltet. Durch das Zuschalten des Triacs 16 jeweils vor den Schaltzeitpunkten des Relais 20 und das Abschalten des Triacs 16 jeweils nach dessen Schaltzeitpunkten wird die Verlustleistung während der Schaltvorgänge am Relais 20 stark eingeschränkt. Bei einem eingeschalteten Triac 16 fällt in der Regel eine Spannung von maximal 1 bis 1,5 V ab. Bei dem parallel geschalteten Relais 20 beträgt der Spannungsabfall daher ebenfalls nur maximal 1,5 V, wenn der Triac 16 zum Schaltvorgang des Relais 20 eingeschaltet ist. Aufgrund der deutlich geringeren Verlustleistung am Relais 20 werden die oben genannten Nachteile, die seine Lebensdauer begrenzen, beseitigt.

Andererseits benötigt der Triac 16, da er während des Betriebs des Verbrauchers 10 nicht eingeschaltet ist und den hohen Laststrom nur während seiner kurzen Einschaltdauern von zum Beispiel nur 100 ms führt, keine Zwangskühlung durch einen Kühlkörper oder zumindest nur einen deutlich kleineren Kühlkörper als dies bei der ausschließlichen Verwendung eines Triacs für die Schaltvorrichtung 12 der Fall wäre.

Die oben beschriebene Schaltvorrichtung 12 der vorliegenden Erfindung hat gegenüber herkömmlichen Schaltvorrichtungen bzw. den eingangs beschriebenen Lösungsansätzen des Standes der Technik insbesondere die folgenden Vorteile:
- Es wird nur ein Lastkreis mit zugehöriger Verdrahtung benötigt.
- Es kann ein kostengünstiges Relais verwendet werden, das lediglich so zu dimensionieren ist, dass es den Laststrom dauerhaft führen kann, und dessen Auslegung seiner Lebensdauer in Bezug auf die Schalthäufigkeit sich auf die rein mechanischen Schaltvorgänge bezieht.
- Es kann ein Triac ganz ohne oder nur mit einem kleinen Kühlkörper eingesetzt werden.
- Insgesamt ist daher die Schaltvorrichtung 12 mit Triac 16 und Relais 20 kostengünstiger und montagefreundlicher als die herkömmlichen Schaltvorrichtungen.
- Die Schaltvorrichtung 12 ist in vorteilhafter Weise speziell bei elektrischen Verbrauchern anwendbar, die eine große Anzahl von Schaltvorgängen und einen hohen Laststrom erfordern.

## Patentansprüche

1. Schaltvorrichtung (12) zum Ansteuern eines Verbrauchers (10), die in Reihe zu dem anzusteuernden Verbraucher (10) zwischen zwei Anschlüssen (N, L) einer Spannungsversorgung anzuordnen ist,
**dadurch gekennzeichnet,**
**dass** die Schaltvorrichtung (12) eine Parallelschaltung aus einem Triac (16) und einem Relais (20) umfasst, die unabhängig voneinander ansteuerbar sind.

2. Schaltvorrichtung nach Anspruch 1,
**dadurch gekennzeichnet,**
**dass** dem Triac (16) und dem Relais (20) jeweils eine Ansteuerschaltung (18, 22) zugeordnet ist; und
**dass** jede der Ansteuerschaltungen (18, 22) mit einem Steueranschluss (26a, 26b) verbunden ist.

3. Schaltvorrichtung nach Anspruch 2,
**dadurch gekennzeichnet,**
**dass** der Triac (16) und das Relais (20) zusammen mit ihren Ansteuerschaltungen (18, 22) in einem gemeinsamen Gehäuse angeordnet sind.

4. Schaltvorrichtung nach Anspruch 2 oder 3,
**dadurch gekennzeichnet,**
**dass** die Schaltvorrichtung (12) einen Anschluss zur Spannungsversorgung der Ansteuerschaltungen (18, 22) aufweist.

5. Schaltvorrichtung nach Anspruch 2 oder 3,
**dadurch gekennzeichnet,**
**dass** die Spannungsversorgung der Ansteuerschaltungen (18, 22) aus der Spannungsversorgung (N, L) des Verbrauchers (10) oder aus Steuersignalen der Ansteuerschaltungen (18, 22) gewonnen wird.

6. Schaltvorrichtung nach einem der Ansprüche 1 bis 5,
**dadurch gekennzeichnet,**
**dass** der Verbraucher (10) eine Heizung eines Haushaltsgeräts wie beispielsweise eines Wäschetrockners ist.

7. Verfahren (12) zum Ansteuern eines Verbrauchers (10) mit einer Schaltvorrichtung (12), die in Reihe zu dem anzusteuernden Verbraucher (10) zwischen zwei Anschlüssen (N, L) einer Spannungsversorgung angeordnet ist,
**dadurch gekennzeichnet,**
**dass** die Schaltvorrichtung (12) eine Parallelschaltung aus einem Triac (16) und einem Relais (20) umfasst; und
**dass** der Triac (16) und das Relais (20) unabhängig voneinander angesteuert werden.

8. Verfahren nach Anspruch 7,
**dadurch gekennzeichnet,**
**dass** zum Ein- und Ausschalten des Verbrauchers (10) der Triac (16) eingeschaltet wird; und
**dass** zum Betrieb des Verbrauchers (10) das Relais (20) eingeschaltet wird und der Triac (16) ausgeschaltet wird.

9. Verfahren nach Anspruch 8,
**dadurch gekennzeichnet,**
**dass** ein Einschaltvorgang des Verbrauchers (10) die folgenden Schritte umfasst:
a) ausgehend von einem ausgeschalteten Triac (16) und einem ausgeschalteten Relais (20) wird zunächst der Triac (16) eingeschaltet;
b) bei eingeschaltetem Triac (16) wird dann das Relais (20) eingeschaltet; und
c) bei eingeschaltetem Relais (20) wird dann der Triac (16) ausgeschaltet.

10. Verfahren nach Anspruch 8 oder 9,
**dadurch gekennzeichnet,**
**dass** ein Ausschaltvorgang des Verbrauchers (10) die folgenden Schritte umfasst:
a) ausgehend von einem ausgeschalteten Triac (16) und einem eingeschalteten Relais (20) wird zunächst der Triac (16) eingeschaltet;
b) bei eingeschaltetem Triac (16) wird dann das Relais (20) ausgeschaltet; und
c) bei ausgeschaltetem Relais (20) wird dann der Triac (16) ausgeschaltet.

11. Verfahren nach einem der Ansprüche 7 bis 10,
**dadurch gekennzeichnet,**
**dass** der Verbraucher (10) eine Heizung eines Haushaltsgeräts wie beispielsweise eines Wäschetrockners ist.
